# EUROPÄISCHE PATENTSCHRIFT

(11) **EP 3 672 781 B1**
(45) Veröffentlichungstag und Bekanntmachung des Hinweises auf die Patenterteilung: **01.09.2021**
(21) Anmeldenummer: 18752097.8
(22) Anmeldetag: 19.07.2018
(51) Int. Cl.: B29C 53/52, B33Y 80/00, B65B 9/22, B29L 31/00, B29L 23/00

(54) **FORMSCHULTER UND VERFAHREN ZUR HERSTELLUNG EINER FORMSCHULTER**
FORMING SHOULDER AND METHOD FOR PRODUCING A FORMING SHOULDER
ÉPAULE DE FORMAGE ET PROCÉDÉ DE FABRICATION D'UNE ÉPAULE DE FORMAGE

(30) Priorität: 22.08.2017 DE 102017214651
(43) Veröffentlichungstag der Anmeldung: 01.07.2020
(73) Patentinhaber: Rovema GmbH, 35463 Fernwald (DE)
(72) Erfinder: BECKER, Thomas, 61231 Bad Nauheim (DE)
(74) Vertreter: advotec.
(86) Internationale Anmeldenummer: PCT/EP2018/069674
(87) Internationale Veröffentlichungsnummer: WO 2019/037969

(56) Entgegenhaltungen:
- WO-A1-2014/170121
- DE-A1- 4 038 888
- DE-A1- 4 320 713
- DE-A1- 10 309 020

## Beschreibung

Die Erfindung betrifft eine Formschulter nach dem Oberbegriff des Anspruchs 1. Weiter betrifft die Erfindung ein Verfahren zur Herstellung einer Formschulter.

Zur Herstellung von Formschultern, wie sie beispielsweise in Schlauchbeutelmaschinen verwendet werden, sind verschiedene Verfahren bekannt. Derartige Formschultern umfassen üblicherweise ein Schulterteil und ein Prismateil, die entlang einer Umformkante miteinander verbunden sind. Eine Möglichkeit zur Herstellung solcher Formschultern besteht darin, jede Formschulter einzeln in Handarbeit herzustellen, indem zunächst die benötigten Einzelteile angefertigt und anschließend montiert werden. Nach der Montage der Einzelteile werden die Maßhaltigkeit der Formschulter und ihr Verhalten im Einsatz geprüft und im Allgemeinen in mehreren Schritten eine Feinbearbeitung durchgeführt, um Abweichungen von den Sollmaßen zu beseitigen, um eine knitterfreie Umformung der ebenen Folienbahn zum gewünschten Folienschlauch zu erreichen.

Häufig kommt ein Herstellungsverfahren zur Anwendung, bei dem die theoretisch ermittelten Einzelteile maschinell, beispielsweise durch Fräsen oder Biegen hergestellt und anschließend manuell zusammengefügt werden. Beispielsweise werden bei einer aus Blech zugeschnittenen Formschulter zunächst die ebenen Abwicklungen der Einzelteile von Schulterteil und Prismateil sowie gegebenenfalls eines Flansches und Stützelements durch Laserschneiden und/oder Fräsen präzise zugeschnitten. Prismateil und Schulterteil werden anschließend weitgehend manuell gerundet und manuell zueinander positioniert und durch Schweißen bzw. Lösen fixiert. Die Rundungsgenauigkeit des Prismateils ist durch Rundungsmaschinen genau herstellbar und messbar.

Prismateile für runde Schlauchquerschnitte werden in der Praxis auch aus Rohrmaterialien gefertigt, wobei die Umformkante auf einer CNC-Fräsmaschine sehr präzise herausgefräst werden kann. Dieses Verfahren ist jedoch aufwendig. Zunächst müssen die Rohre für die verschiedenen Zylinderdurchmesser vorrätig gehalten werden, wobei pro Format immer nur ein sehr kurzes Stück benötigt wird. Die spanende Bearbeitung bei der Herstellung der Umformkante sowie gegebenenfalls beim Ausbringen des Rohres ist teure und aufwendige Feinwerkbearbeitung.

Um die Biegeform des Schulterteils aus einem Blechzuschnitt herzustellen, sind verschiedene Methoden bekannt. Zum einen kann die endgültige Form durch schrittweises manuelles Biegen des Blechzuschnitts bei stetiger Kontrolle des Biegeergebnisses mit Hilfe von extra angefertigten Biegeleren hergestellt werden. Es ist relativ einfach und schnell, die Form des Schulterblechs vorzubiegen, also zunächst relativ ungenau herzustellen. Die Teile weisen dabei beispielsweise eine Abweichung von +/- 10 mm von der vorgegebenen Form auf. Erforderlich ist jedoch eine Genauigkeit von mindestens +/- 0,2 mm. Deshalb erfordert diese Methode eine große Erfahrung des Arbeiters und viel Zeit.

Zum anderen kann die Formung des Schulterteils gleichzeitig mit der Montage des Schulterteils an das vorbereitete Prismateil erfolgen. Dies geht schneller, ist jedoch ungenauer. Stimmt die räumliche Form des Schulterteils nicht mit der theoretisch bestimmten Form überein, wird auch die an sich exakte Kontur der Umformkante am Prismateil entwertet. Es können beispielsweise Falten bei der Schlauchformung entstehen.

Aus der DE 10 2010 036 229 A1 ist eine Formschulter bekannt, die durch Zuschneiden und Umformen mehrerer Blechabschnitte hergestellt wird. Ein großer Nachteil dabei ist es, dass die hochkomplexen Freiformflächen, insbesondere des Schulterteils, nur sehr aufwendig reproduziert werden können.

Die DE 43 20 713 A1 beschreibt eine Formschulter, bei der die Mantelfläche und insbesondere die Umformkante von einer Metallschicht gebildet ist, wobei diese Metallschicht mit einem Kunststoff hinterfüttert wird.

Ausgehend von diesem Stand der Technik ist es deshalb Aufgabe der vorliegenden Erfindung, eine neue Formschulter und ein neues Verfahren zur Herstellung einer Formschulter vorzuschlagen, mit dem die Produktionsergebnisse leichter reproduziert und mit höherer Fertigungsgenauigkeit hergestellt werden können.

Diese Aufgabe wird durch eine Formschulter und ein Verfahren nach der Lehre der unabhängigen Hauptansprüche gelöst.

Vorteilhafte Ausführungsformen der Erfindung sind Gegenstand der Unteransprüche.

Die Formschulter beruht auf dem Grundkonzept, dass nur die Umformkante selbst von einem Metallteil gebildet wird. Denn nur die Umformkante der Formschulter ist einem hohen Verschleiß ausgesetzt und muss eine entsprechende Verschleißfestigkeit aufweisen. An das die Umformkante bildende Metallteil sind dann ein aus Kunststoff hergestelltes Schulterteil und/oder ein aus Kunststoff hergestelltes Prismateil angeformt und bilden gemeinsam mit dem Metallteil die Formschulter. Da Kunststoff sich deutlich einfacher und mit einfacheren Mitteln auch durchaus sehr präzise verarbeiten lässt, kann der Herstellungsaufwand und die Reproduzierbarkeit durch Verwendung der Formschulter signifikant verbessert werden.

Besonders einfach und kostengünstig ist es, wenn das aus Kunststoff bestehende Schulterteil und/oder das aus Kunststoff bestehende Prismateil erfindungsgemäß mit einem Kunststoffdruckverfahren hergestellt sind.

Besonders groß ist der erfindungsgemäße Vorteil, wenn sowohl das Schulterteil als auch das Prismateil aus Kunststoff hergestellt sind, so dass im Wesentlichen nur die Umformkante von einem Metallteil gebildet ist.

Im Hinblick auf die exakte Formgebung bei der Herstellung der Formschulter und zur Herstellung eines hochfesten Verbunds zwischen dem Metallteil und den Kunststoffteilen der Formschulter ist es besonders vorteilhaft, wenn der Kunststoff des Schulterteils und der Kunststoff des Prismateils miteinander verbunden sind und das Metallteil zur Bildung der Umformkante auf der von der Folie wegweisenden Rückseite umschließt. Im Ergebnis ist dann das die Umformkante bildende Metallteil zumindest teilweise in den Kunststoff des Schulterteils bzw. des Prismateils eingebettet.

Das erfindungsgemäße Verfahren wird dadurch charakterisiert, dass zumindest ein Metallteil zur Bildung einer Umformkante in einer Kunststoffdruckvorrichtung fixiert wird. Anschließend werden das Schulterteil und/oder das Prismateil durch 3D-Kunststoffdruck unter Bildung einer Verbindung zum Metallteil aus Kunststoff hergestellt.

Eine Ausführungsform der Erfindung ist in den Zeichnungen schematisiert dargestellt und wird nachfolgend beispielhaft erläutert.

Es zeigen:
- **Fig. 1**: eine Formschulter in Ansicht von oben;
- **Fig. 2**: die Formschulter gemäß Fig. 1 entlang der Schnittlinie I-I;
- **Fig. 3**: die Umformkante der Formschulter gemäß Fig. 2 in einem vergrößerten Detailausschnitt.

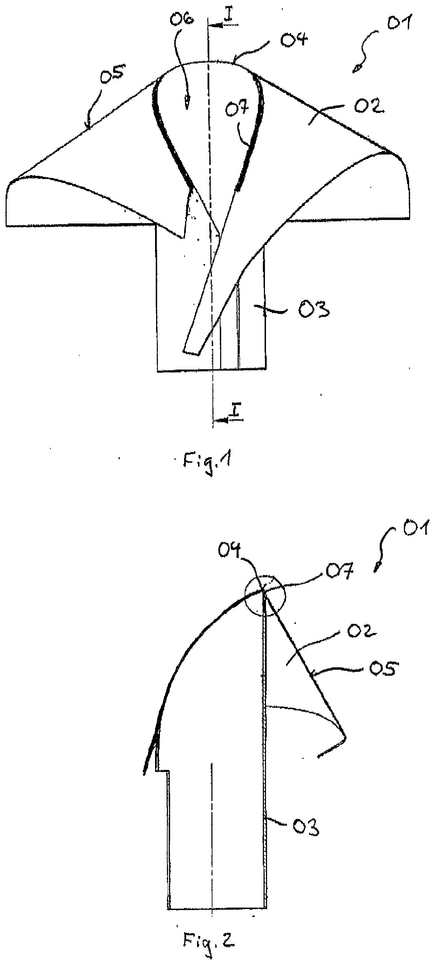

**Fig. 1** zeigt eine Formschulter 01 in Ansicht von vorne. Die Formschulter 01 dient zur Verwendung in einer Schlauchbeutelmaschine, um aus einer ebenen Folienbahn einen Folienschlauch zu bilden, der anschließend durch Längssiegelung und Quersiegelung zu Schlauchbeutelverpackungen verarbeitet werden kann. Die Formschulter 01 besteht im Wesentlichen aus einem Schulterteil 02 und einem Prismateil 03, die entlang einer Umformkante 04 miteinander verbunden sind. Die ebene Folienbahn wird während der Bearbeitung an der äußeren Schulterfläche 05 zunächst vorgeformt und dann über die Umformkante 04 in die Einlassöffnung 06 des Prismateils 03 gezogen. Dabei wird aus der ebenen Folienbahn ein Folienschlauch gebildet, dessen Querschnitt dem Innenquerschnitt des Prismateils 03 entspricht.

**Fig. 2** zeigt die Formschulter 01 im Querschnitt entlang der Schnittlinie I-I.

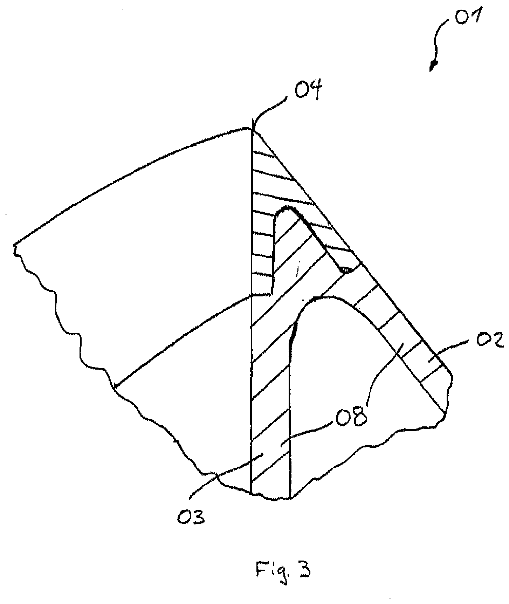

**Fig. 3** zeigt den Querschnitt der Formschulter 01 im Bereich der Umformkante 04 in einem vergrößerten Detailausschnitt. Die Umformkante 04 wird von einem Metallteil 07 gebildet, das hochverschleißfeste Eigenschaften aufweist. Das Metallteil 07 kann beispielsweise durch spanende Bearbeitung oder durch Urformung, beispielsweise Gießen hergestellt sein. Auch die Herstellung durch Lasersintern ist denkbar.

Die übrige Formschulter 01 abgesehen von dem Metallteil 07 besteht aus einem formstabilen Kunststoffteil 08, das das Metallteil 07 auf der Rückseite hintergreift und insgesamt das Schulterteil 02 und das Prismateil 03 bildet. Zur Herstellung der Formschulter 01 wird zunächst das Metallteil 07 in eine 3D-Kunststoffdruckvorrichtung eingespannt und dort die Formschulter 02 und das Prismateil 03 durch 3D-Kunststoffdruck mit hoher Präzision und Wiederholgenauigkeit hergestellt.

## Patentansprüche

1. Formschulter (01) zur Bildung eines Folienschlauchs aus einer ebenen Folienbahn, umfassend ein Schulterteil (02) und ein Prismateil (03), die entlang einer Umformkante (04) miteinander verbunden sind, wobei das Schulterteil (02) eine äußere Schulterfläche (05) aufweist, über die die Folienbahn zu einer durch die Umformkante (04) begrenzten Einlassöffnung (06) des Prismateils (03) geführt werden kann, wobei die Umformkante (04) von zumindest einem Metallteil (07) gebildet wird, wobei an das Metallteil (07) ein aus Kunststoff hergestelltes Schulterteil (02) und/oder ein aus Kunststoff hergestelltes Prismateil (03) angeformt ist
**dadurch gekennzeichnet**,
dassSchulterteil (02) und/oder Prismateil (03) in einem 3D-Kunststoffdruckverfahren hergestellt sind..

2. Formschulter nach Anspruch 1,
**dadurch gekennzeichnet,**
**dass** an das die Umformkante (04) bildende Metallteil (07) das aus Kunststoff hergestellte Schulterteil (02) und das aus Kunststoff hergestelltes Prismateil (03) angeformt sind, wobei der Kunststoff des Schulterteils (02) und der Kunststoff des Prismateils (03) stoffschlüssig miteinander verbunden sind und ein Kunststoffteil (08) bilden.

3. Formschulter nach Anspruch 2,
**dadurch gekennzeichnet,**
**dass** das Kunststoffteil (08) das Metallteil (07) auf der von der Folie wegweisenden Rückseite umschließt.

4. Verfahren zur Herstellung einer Formschulter (01) zur Bildung eines Folienschlauchs aus einer ebenen Folienbahn, umfassend ein Schulterteil (02) und ein Prismateil (03), die entlang einer Umformkante (04) miteinander verbunden sind, wobei das Schulterteil (02) eine äußere Schulterfläche (05) aufweist, über die die Folienbahn zu einer durch die Umformkante (04) begrenzten Einlassöffnung (06) des Prismateils (03) geführt werden kann,
**dadurch gekennzeichnet,**
**dass**
a) zumindest ein Metallteil (07) zur Bildung der Umformkante (04) in einer 3D-Kunststoffdruckvorrichtung fixiert wird;
b) das Schulterteil (02) und/oder das Prismateil (03) durch 3D-Kunststoffdruck unter Bildung einer Verbindung zum Metallteil (04) aus Kunststoff hergestellt werden.

## Claims

1. A forming shoulder (01) for forming a film tube from a flat film web, the forming shoulder comprising a shoulder piece (02) and a prism piece (03) which are connected to each other along a forming edge (04), the shoulder piece (02) having an outer shoulder surface (05) via which the film web can be guided to an entry opening (06) of the prism piece (03) limited by the forming edge (04), the forming edge (04) being made of at least one metal piece (07), a plastic shoulder piece (02) and/or a plastic prism piece (03) being molded onto the metal piece (07)
characterized in thatthe shoulder piece (02) and/or the prism piece (03) is/are produced using a 3D plastic printing method .

2. The forming shoulder according to claim 1,
**characterized in that**
the plastic shoulder piece (02) and the plastic prism piece (03) are molded onto the metal piece (07) forming the forming edge (04), the plastic of the shoulder piece (02) and the plastic of the prism piece (03) being positively bonded to each other and forming a plastic piece (08).

3. The forming shoulder according to claim 2,
**characterized in that**
the plastic piece (08) encloses the metal piece (07) on the backside facing away from the film.

4. A method for producing a forming shoulder (01) for forming a film tube from a flat film web, the forming shoulder comprising a shoulder piece (02) and a prism piece (03) which are connected to each other along a forming edge (04), the shoulder piece (02) having an outer shoulder surface (05) via which the film web can be guided to an entry opening (06) of the prism piece (03) limited by the forming edge (04),
**characterized in that**
a) at least one metal piece (07) is fixated in a 3D plastic printing device for forming the forming edge (04);
b) the shoulder piece (02) and/or the prism piece (03) is/are made of plastic using 3D plastic printing and is/are connected to the metal piece (07) in the process.

## Revendications

1. Épaule de formage (01) pour la formation d'un tube de film d'une bande de film plate, l'épaule de formage comprenant une pièce d'épaule (02) et une pièce de prisme (03) qui sont reliées l'une à l'autre le long d'un bord de formage (04), la pièce d'épaule (02) ayant une surface d'épaule extérieure (05) par laquelle la bande de film peut être guidée vers une ouverture d'entrée (06) de la pièce de prisme (03) limitée par le bord de formage (04), le bord de formage (04) étant fait d'au moins une pièce métallique (07), une pièce d'épaule (02) plastique et/ou une pièce de prisme (03) plastique étant moulée(s) sur la pièce métallique (07)
**caractérisé en ce que**
la pièce d'épaule (02) et/ou la pièce de prisme (03) est/sont produite(s) en utilisant un procédé plastique d'impression 3D.

2. Épaule de formage selon la revendication 1,
**caractérisé en ce que**
la pièce d'épaule (02) plastique et la pièce de prisme (03) plastique sont moulées sur la pièce métallique (07) formant le bord de formage (04), le plastique de la pièce d'épaule (02) et le plastique de la pièce de prisme (03) étant reliés l'un à l'autre par adhérence et formant une pièce plastique (08).

3. Épaule de formage selon la revendication 2,
**caractérisé en ce que**
la pièce plastique (08) encercle la pièce métallique (07) au revers détourné du film.

4. Procédé de fabrication d'une épaule de formage (01) pour produire un tube de film d'une bande de film plate, l'épaule de formage comprenant une pièce d'épaule (02) et une pièce de prisme (03) qui sont reliées l'une à l'autre le long d'un bord de formage (04), la pièce d'épaule (02) ayant une surface d'épaule extérieure (05) par laquelle la bande de film peut être guidée vers une ouverture d'entrée (06) de la pièce de prisme (03) limitée par le bord de formage (04),
**caractérisé en ce que**
a) au moins une pièce métallique (07) est fixée dans un dispositif d'impression 3D pour former le bord de formage (04) ;
b) la pièce d'épaule (02) et/ou la pièce de prisme (03) est/sont faite(s) de plastique en utilisant une application d'impression plastique 3D et/ou sont reliées à la pièce métal (07) dans le processus.
